# FASCICULE DE BREVET EUROPEEN

(11) **EP 0 928 534 B1**
(45) Date de publication et mention de la délivrance du brevet: **11.12.2002**
(21) Numéro de dépôt: 97942093.2
(22) Date de dépôt: 25.09.1997
(51) Int. Cl.: H04M 3/00, H04L 29/06

(54) **PROCEDE ET SYSTEME DE COMMUNICATION INTERACTIVE ENTRE DEUX APPAREILS TELEPHONIQUES VIA LE RESEAU INTERNET**
VERFAHREN UND SYSTEM FÜR INTERAKTIVE KOMMUNIKATION ÜBER INTERNET ZWISCHEN ZWEI TELEFONGERÄTE
METHOD AND SYSTEM FOR INTERACTIVE COMMUNICATION BETWEEN TWO TELEPHONE SETS VIA THE INTERNET

(30) Priorité: 26.09.1996 FR 9611761
(43) Date de publication de la demande: 14.07.1999
(73) Titulaire: Aplio, 95200 Sarcelles (FR)
(72) Inventeur: TEBEKA, Henri, 95160 Montgomery (FR); LUMBROSO, Philippe, 75017 Paris (FR); CONSTANTINI, Eric, 75017 Paris (FR)
(74) Mandataire: Grynwald, Albert
(86) Numéro de dépôt international: FR9701688
(87) Numéro de publication internationale: WO98013986

(56) Documents cités:
- EP-A- 0 656 718
- WO-A-96/20553
- WO-A-96/24215
- WO-A-97/14238
- WO-A-97/23078
- WO-A-97/28628
- US-A- 5 610 910
- GAREISS R: "VOICE OVER THE INTERNET" DATA COMMUNICATIONS, vol. 25, no. 12, septembre 1996, page 93/94, 96, 98, 100 XP000626552
- GRAACANIN D: "IMPLEMENTATION OF THE VOICE TRANSFER OVER TCP/IP" INFORMACIJA TELEKOMMUNIKACIJE AUTOMATI, vol. 12, no. 4, 1993, pages 543-549, XP000672244
- MULLER N: "DIAL 1-800-INTERNET" BYTE, vol. 21, no. 2, 1 février 1996, page 83/84, 86, 88 XP000549779
- KIM G: "TALK IS CHEAP VOICE OVER THE INTERNET" AMERICA'S NETWORK, vol. 100, no. 14, 15 juillet 1996, pages 34-36, 38/39, 60, XP000676851

## Description

La présente invention concerne un procédé de communication interactive entre deux utilisateurs munis chacun d'un appareil téléphonique du réseau téléphonique commuté, via le réseau Internet.

Elle concerne également un système mettant en oeuvre un tel procédé.

Elle trouve une application particulièrement importante bien que non exclusive dans le domaine des communications téléphoniques vocales à faible coût.

On connaît des systèmes permettant d'utiliser le réseau Internet pour émettre et recevoir des communications vocales en temps réel avec un autre interlocuteur connecté au réseau Internet, en simulant ainsi le téléphone.

L'intérêt de ces systèmes réside dans leur faible coût d'utilisation pour les interlocuteurs.

L'accès au réseau Internet ou à un réseau équivalent coûte en effet en général le prix d'une communication locale, pour appeler le fournisseur d'accès local, et un abonnement mensuel modéré, soit moins de 100 F par mois en France en 1996.

Si l'interlocuteur de la communication est loin, cela représente une économie considérable par rapport au prix d'une communication normale au tarif longue distance ou international.

De tels systèmes présentent cependant des inconvénients.

Ils nécessitent en effet la présence d'un micro ordinateur puissant pour chaque interlocuteur, d'un modem et d'une carte son, ce qui limite considérablement le nombre d'utilisateurs potentiels du système.

De plus ils ne permettent d'appeler directement que les personnes disposant d'une connexion permanente avec le réseau Internet.

Dans les autres cas, il est donc nécessaire de passer par la procédure suivante.

Les utilisateurs se mettent tout d'abord d'accord sur une date et une heure de rendez-vous, ainsi que sur le serveur Internet qui servira de point de rencontre. Le moment venu, les utilisateurs doivent ensuite se connecter sur le réseau Internet, puis sur le serveur pré-défini.

Enfin il faut re chercher son interlocuteur dans la liste des usagers de ce serveur. Si son nom n'apparaît pas, il faut attendre, la communication ne pouvant être établie qu'une fois la présence de son interlocuteur détectée.

Il s'agit d'une procédure complexe

Elle s'explique car les usagers qui ne sont pas connectés en permanence au réseau Internet ne disposent pas d'une adresse réseau (adresse IP) fixe. Il est donc impossible de les appeler directement. L'utilisateur appelé doit donc être prévenu, au préalable, et se connecter de lui-même.

Une amélioration de ce système est actuellement envisagée par divers opérateurs.

L'appelant se connecte au réseau Internet, puis à un serveur spécial proche géographiquement de son destinataire.

Il fournit alors à ce serveur le numéro de téléphone de son destinataire.

Le serveur appelle ensuite le destinataire et la communication peut alors s'établir. Dans certains cas, le destinataire n'a pas besoin d'avoir un équipement Internet, le serveur se chargeant de l'interface avec le téléphone classique.

Ce procédé présente cependant également des inconvénients.

Il nécessite en effet un serveur ou un fournisseur d'accès local capable d'appeler un utilisateur, ce qui pose des problèmes techniques et des problèmes de facturation de la communication.

Ce procédé nécessite également de connaître l'adresse Internet du serveur ou fournisseur d'accès local du destinataire, ce qui demande un système de routage complexe à mettre ne place, ou bien un système limité à une table de destinataires de petite dimension, dont le numéro de téléphone et l'adresse du fournisseur auront été configurés par l'appelant.

Enfin, si le destinataire change de fournisseur d'accès ou simplement de point d'accès local chez un même fournisseur, il est nécessaire d'actualiser la configuration de ce destinataire pour tous les appelants potentiels.

On connaît aussi (WO 96/20553; un système de communication téléphonique par Internet via un serveur spécifique dédié, qui nécessite néanmoins un tel serveur avec boîte vocale.

La présente invention vise à fournir un procédé et un système de communication répondant mieux que ceux antérieurement connus aux exigences de la pratique notamment en ce qu'elle permet de s'affranchir de la nécessité d'utiliser un micro ordinateur et ses accessoires en les remplaçant par un petit dispositif autonome d'interface qui se connecte entre un poste téléphonique ordinaire du réseau commuté et la ligne téléphonique ordinaire analogique ou numérique.

Ce dispositif permet ainsi d'ajouter à tout poste téléphonique la possibilité de fonctionner à travers le réseau Internet de façon extrèmement simple et conviviale.

La complexité de la procédure d'appel est également supprimée grâce notamment à une manière nouvelle d'aborder le problème.

En effet, la manière traditionnelle de régler un problème posé par une application Internet, est de rechercher ce qui permettra de résoudre ce problème au sein même d'Internet, de ses protocoles et de ses services.

C'est ainsi que les logiciels existant actuellement ont résolus le problème de l'appel en utilisant un service classique d'Internet : IRC (Internet Relay Chat en terminologie anglo-saxonne).

Ce service permet de mettre en contact deux utilisateurs quelconques de l'Internet via un serveur (appelé serveur IRC). C'est le procédé d'appel décrit précédemment.

On utilisera également et par exemple une passerelle entre le fournisseur ou serveur Internet et le destinataire.

Dans le cas de la présente invention, une approche nouvelle a été utilisée,en mettant en contact téléphonique direct pendant quelques secondes des dispositifs d'interfaces appelants et appelés, qui échangent l'information nécessaire pour se retrouver ensuite sur le réseau Internet de manière automatique ou semi automatique.

Dans ce but l'invention propose notamment un procédé de communication interactive entre au moins deux utilisateurs munis chacun d'un appareil téléphonique du réseau téléphonique commuté, via le réseau Internet, caractérisé en ce que, chaque appareil téléphonique étant directement connecté en local à un dispositif d'interface associé,
- un premier utilisateur, initiateur de la communication, compose sur son appareil téléphonique le numéro de téléphone du second utilisateur, pour communication via le réseau téléphonique commuté, en signalant à son dispositif d'interface associé qu'il souhaite une communication via le réseau Internet,
- le dispositif interface du premier utilisateur établit la communication avec le dispositif interface du second utilisateur via le réseau Internet, les appareils téléphoniques des deux utilisateurs étant raccrochés,
- une fois la communication via le réseau Internet établie, chaque dispositif d'interface le signale à son appareil téléphonique associé,
- chacun des utilisateurs décroche alors son appareil téléphonique et communique en interactif avec son interlocuteur via le réseau Internet

Dans des modes de réalisation avantageux, on a de plus recours à l'une ou à l'autre des dispositions suivantes :
- le premier utilisateur raccroche son appareil téléphonique immédiatement après avoir signalé au dispositif d'interface associé qu'il souhaite une communication via le réseau Internet, ladite communication étant ensuite établie automatiquement par le premier dispositif interface avec le second dispositif interface;
- le premier utilisateur obtient la communication téléphonique avec le second utilisateur via le réseau téléphonique commuté, signale à son interlocuteur via ledit réseau téléphonique commuté qu'il va continuer la communication via le réseau Internet, et passe la main au dispositif interface associé à son appareil téléphonique qui établit alors la communication avec l'autre dispositif associé avec l'appareil téléphonique du second utilisateur via le réseau Internet, pendant que lesdits utilisateurs raccrochent respectivement leurs appareils téléphoniques;
- pour communiquer entre eux les deux dispositifs interface échangent un code de rendez vous respectif sur un serveur prédéfini via le réseau téléphonique commuté, coupent ensuite la communication directe via ledit réseau téléphonique commuté, se connectent à leur fournisseur d'accès Internet respectif puis audit serveur prédéfini et cherchent leur code de rendez vous, obtiennent leur adresses (IP) respectives sur le réseau Internet, se déconnectent du serveur prédéfini et établissent alors la communication téléphonique entre les utilisateurs via le dit réseau Internet;
- pour établir la communication, le premier dispositif interface se connecte au réseau Internet, obtient son adresse (IP) sur ledit réseau et, tout en restant connecté audit réseau, établit la communication avec le second dispositif via le réseau téléphonique commuté et lui transmet son adresse (IP), puis les deux dispositifs d'interface se déconnectent du réseau téléphonique commuté, le second dispositif se connecte à son fournisseur d'accès au réseau Internet et établit alors la communication avec le premier dispositif grâce à l'adresse (IP) obtenue précédemment via le réseau téléphonique commuté, de façon à permettre la communication entre les dispositifs via le réseau Internet;
- la communication entre les utilisateurs est vocale;
- la communication entre les utilisateurs est du type vidéo.

L'invention propose également un système de communication interactive mettant en oeuvre le procédé décrit ci-dessus.

Elle concerne également un système de communication interactive entre au moins deux utilisateurs utilisant chacun un appareil téléphonique du réseau commuté, via le réseau Internet, caractérisé en ce que le système comprend au moins deux dispositifs d'interface locaux, chacun connecté d'un coté audit réseau téléphonique et de l'autre coté à un appareil téléphonique respectif, chaque dispositif comportant :
- des moyens de stockage et de traitement de données transmises par les appareils téléphoniques,
- des moyens de traitement et d'émission de signaux agencés pour connecter ledit dispositif sur le réseau Internet et communiquer avec un autre dispositif,
- des moyens de réception des signaux,
- des moyens de traitement des signaux reçus,
- et des moyens de signalisation de l'établissement de ladite connexion Internet vers l'appareil associé.

Avantageusement le système comporte des moyens de des moyens de compression/décompression de la voix.

Egalement le système comprend de façon avantageuse, des moyens de création et d'identification d'un code de rendez-vous dans un serveur prédéfini.

Egalement avantageusement le système comporte des moyens de connexion et de déconnexion du réseau téléphonique commuté et du réseau Internet, en corrélation l'un avec l'autre.

Avantageusement l'invention propose également un procédé et un système du type décrit ci-avant mettant en oeuvre une procédure accélérée dite de connexion rapide en "V23"., V23 étant une norme de l'Union Internationale des Télécommunications (UIT).

Pour ce faire, lors de la connexion du premier dispositif sur le réseau commuté on émet une fréquence de 1300 Hz cadencée, qui, si elle est détectée par le dispositif récepteur, enclenche une porteuse de fréquence inférieure, par exemple de 390 Hz.

L'utilisation de cette porteuse accélère grandement la procédure.

Il est aussi avantageusement proposé un système de communication, caractérisé en ce qu'il comporte de plus des moyens de connexion rapides, propres à émettre et détecter du 1300 Hz cadencé et des moyens propres à utiliser une onde porteuse de plus faible fréquence pour accélérer la connexion.

Dans un autre mode de réalisation avantageux le procédé et le système sont encore améliorés en prévoyant un moyen original d'attribution d'adresses IP.

Il est en effet difficile mais nécessaire de connaître l'adresse IP attribuée à un utilisateur Internet.

Il existe à ce sujet principalement deux manières d'accéder à Internet : une connexion permanente et une connexion épisodique dite "dial-up" en langage anglo-saxon.

Dans le cas d'une connexion permanente, chaque machine connectée dispose d'une adresse Internet (adresse IP) fixe et unique dans le monde entier.

Dans le cas des connexions "dial-up" le fournisseur d'accès Internet dispose d'une plage d'adresses IP qui lui sont réservées et qu'il attribue au coup par coup aux utilisateurs qui se connectent. Un même utilisateur pourra donc se voir attribuer une adresse IP distincte à chacune de ses connexions.

La raison de ce système est que l'espace d'adressage d'Internet est encombré et qu'il n'est pas possible aujourd'hui d'attribuer une adresse fixe à chaque utilisateur ou équipement connectable.

Dans l'application de téléphonie il faut connaître les adresses IP. En effet un utilisateur qui prend l'initiative de lancer une session doit avoir un logiciel capable de contacter l'autre utilisateur destinataire, et pour cela il a besoin de son adresse IP.

Les solutions actuellement proposées consistent en une publication de l'adresse dans une page WEB.

Il existe en effet des logiciels qui permettent de publier automatiquement l'adresse IP de l'utilisateur qui se connecte dans une page WEB personnelle de cet utilisateur, laquelle page pourra alors être consultée par toute personne sur Internet ayant besoin de cette adresse.

Un tel système présente des inconvénients. La publication sur une page WEB est lente et gourmande en ressources (données transférées et espace disque sur un serveur). Il n'est par ailleurs pas facile d'automatiser la récupération de cette adresse pour des applications diverses.

Une autre méthode consiste à utiliser le courrier électronique ("mail" en langue anglo-saxonne) d'Internet pour échanger grâce aux adresses "e-mail" fixes des utilisateurs les adresses IP variables.

Ici encore il existe des inconvénients. Le temps d'acheminement d'un e-mail est totalement imprévisible et peut être très long. Le protocole e-mail est de plus complexe à intégrer dans une application quelconque.

Le principe de base du procédé de communication selon le mode de réalisation avantageux de l'invention décrit ci-après est d'attribuer un numéro de série fixe et unique à tout dispositif connectable à Internet et désirant utiliser le protocole, que l'on stocke dans un appareil dit appareil "IP Finder" connecté au, et interrogeable via le, réseau Internet.

Dès qu'un dispositif est connecté à Internet, il envoie un paquet d'informations à cet appareil Ce paquet contient :
- l'adresse IP,
- le numéro de série du dispositif,
- un numéro de session (incrémenté automatiquement par le dispositif à chaque connexion).

Par session, il faut entendre une tentative de communication entre deux dispositifs.

Lorsqu'un autre dispositif a besoin de l'adresse IP du premier dispositif, il envoie un paquet à l'appareil IP Finder contenant le numéro de série de l'équipement dont il cherche l'adresse IP.

L'appareil IP Finder lui répond aussitôt avec un paquet d'informations contenant l'adresse IP recherchée ainsi que le numéro du dispositif.

La mise à jour des sessions des dispositifs se fait lors du contact téléphonique initial.

Le dispositif à l'origine du besoin de connexion contacte en effet, selon ce mode de réalisation de l'invention, le dispositif destinataire d'une manière directe et récupère son numéro de session en cours.

Cette échange de sessions se fait par exemple comme suit :
- appel téléphonique direct et échange de données entre modems, ou
- appel téléphonique direct et échange de données en fréquences vocales, ou
- appel sur un service de type radiomessage.

Dans tous les cas, une fois le contact initial établi, le dispositif destinataire sait qu'il doit se connecter à Internet et envoyer son paquet à l'appareil IP Finder.

Avantageusement le procédé selon un mode de réalisation de l'invention propose donc d'attribuer un numéro de série fixe et unique à tous les dispositifs, numéro que l'on stocke dans au moins un appareil connecté et interrogeable par les dispositifs pour permettre au dispositif appelant de retrouver les adresses IP des dispositifs appelés.

Egalement avantageusement, dès qu'un dispositif est connecté à Internet, il envoie un paquet d'informations audit appareil, ledit paquet contenant : l'adresse IP, le numéro de série du dispositif et un numéro de session, et lorsqu'un autre dispositif a besoin de l'adresse IP du premier dispositif, il envoie un paquet audit appareil, et ledit appareil répond en envoyant un paquet d'informations contenant l'adresse IP recherchée ainsi que le numéro du dispositif.

Ainsi l'invention propose-t-elle un système mettant en oeuvre l'une et/ou l'autre des dispositions précédentes, caractérisé en ce qu'un numéro de série fixe et unique ayant été attribué à chaque dispositif, il comporte de plus au moins un appareil comprenant des moyens pour stocker l'adresse IP des dispositifs qui se connectent sur le réseau Internet, et leur numéro de série, et des moyens de recherche et de transmission d'une adresse IP recherchée et du numéro de série d'un dispositif correspondant à la demande d'un autre dispositif.

La présente invention concerne également des dispositifs interface tels que décrits en référence au texte et aux figures.

La présente invention sera mieux comprise à la lecture de la description des modes de réalisation donnés ci-après à titre non limitatif.

Elle se réfère aux dessins qui l'accompagnent dans lesquels :
- La figure 1 est une vue schématique d'un mode de réalisation du système selon l'invention.
- La figure 2 est un organigramme de fonctionnement d'un mode de réalisation de l'étape principale du procédé selon l'invention sur ligne analogique.
- La figure 3 est un organigramme de fonctionnement d'un mode de réalisation de l'étape principale du procédé selon l'invention sur ligne numérique.
- Les figures 4 et 5 sont des schémas blocs de dispositifs interfaces de l'invention plus particulièrement décrits ici.

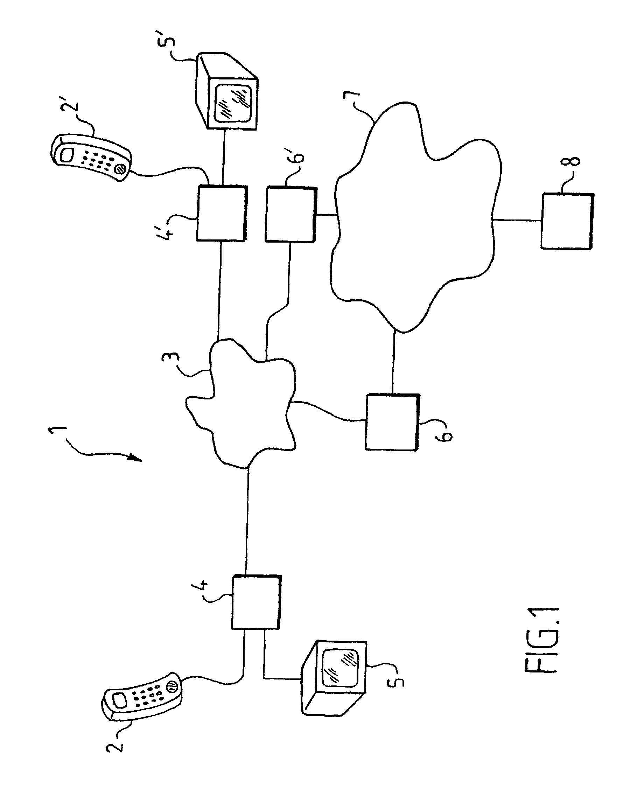

La figure 1 montre un système de communication interactive entre deux utilisateurs utilisant chacun un appareil téléphonique 2, 2' du réseau commuté 3.

Le système comprend au moins deux dispositifs d'interface 4, 4' locaux chacun connecté d'un côté audit réseau téléphonique commuté 3 et de l'autre côté à l'appareil téléphonique 2, 2' correspondant.

Chaque dispositif 4 comporte des moyens de stockage et de traitement des données transmises par les appareils téléphoniques, qui peuvent être également et par exemple des appareils vidéos 5.

Le dispositif 4 comprend également des moyens de traitement et d'émission de signaux agencés pour connecter le dispositif 4 sur le réseau Internet, via un fournisseur d'accès 6 audit réseau Internet 7.

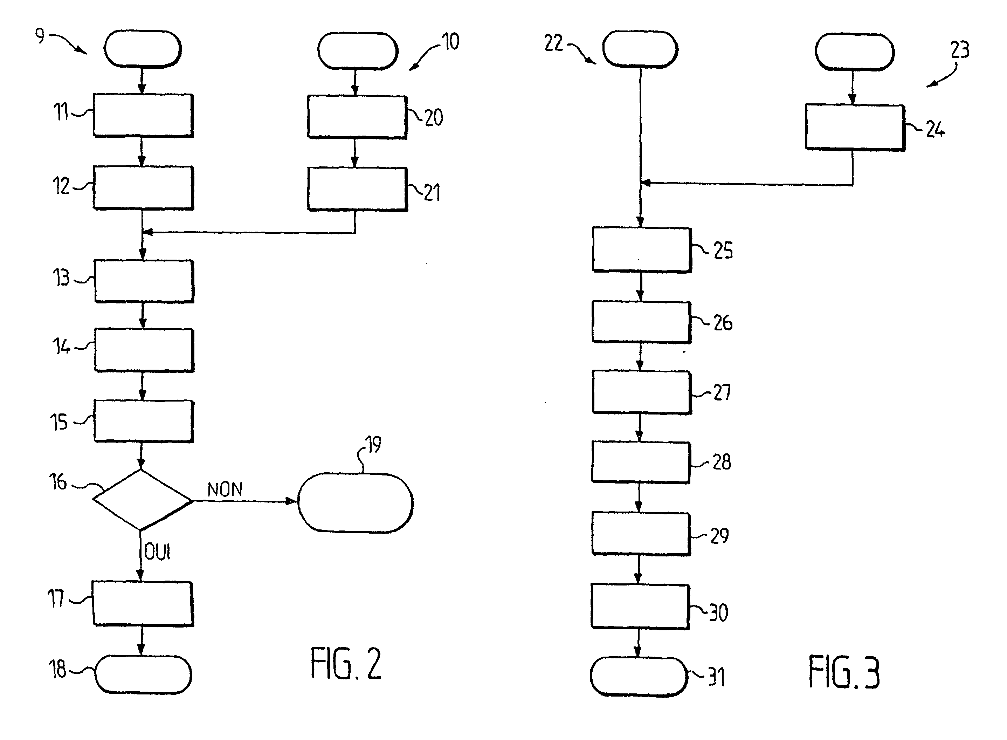

Il est également prévu un serveur prédéfini 8 connecté au réseau, qui va servir de point de rencontre comme cela va être décrit plus avant en référence aux figures 2 et 3.

La figure 2 est un organigramme de fonctionnement de l'étape principale de connexion mise en oeuvre par le procédé selon l'invention sur ligne analogique.

Deux modes de fonctionnement sont prévus, à savoir le mode automatique 9 ou le mode manuel 10.

En mode automatique le dispositif ou boîtier dit "Free Talk" appelle le dispositif ou boîtier "Free Talk" destinataire 4' via le réseau téléphonique commuté 3 (étape 11).

Le dispositif appelé 4' établit alors la communication directe via le réseau commuté 3 avec le dispositif appelant 4, par exemple en reprenant l'appel si l'utilisateur destinataire avait décroché son poste téléphonique (étape 12).

Les deux dispositifs 4 et 4' échangent alors sur le réseau téléphonique commuté 3 un code de rendez-vous respectif sur un serveur prédéfini 8 par exemple de type IRC (étape 13).

Les deux dispositifs 4 et 4' coupent alors la communication directe via le réseau commuté et se connectent à leurs fournisseurs d'accès Internet respectifs 6 et 6' (étape 14).

Les deux dispositifs se connectent ensuite au serveur prédéfini 8 et cherchent le code de rendez-vous convenu (étape 15).

Si le code est trouvé dans un délai prédéfini (étape 16), les dispositifs 4 et 4' obtiennent leurs adresses respectives de réseau (IP) et se déconnectent du serveur prédéfini 8.

Les dispositifs établissent alors la communication entre eux pour la fonction de téléphonie selon l'invention (étape 18).

Dans le cas où le code n'est pas trouvé dans un délai prédéfini (étape 16), une indication précisant que l'appel a échoué (étape 19) est donnée, l'utilisateur étant par exemple prévenu par un signal sonore.

Le procédé qui vient d'être décrit en référence à la figure 2 peut également fonctionner en mode manuel.

Dans ce cas au lieu des deux étapes initiales 11 et 12 il est prévu deux étapes initiales 20 et 21.

Lors de l'étape 20, l'utilisateur appelant établit une communication vocale ordinaire avec l'utilisateur destinataire via le réseau téléphonique commuté 3, puis demande le passage en mode selon l'invention par exemple en effectuant le code "###".

Les deux dispositifs récupèrent alors la communication vocale en cours et entrent en communication directe (étape 21).

Les étapes 13 à 18 qui viennent d'être décrites sont ensuite mises en oeuvre.

La figure 3 montre un mode de réalisation du procédé selon l'invention sur ligne numérique en mode automatique (22) ou en mode manuel (23), ce dernier mode différant du mode automatique en ce que il comporte une étape supplémentaire initiale 24

Dans cette étape l'utilisateur appelant établit une communication vocale ordinaire avec l'utilisateur destinataire puis demande le passage en mode selon l'invention et raccroche.

Le procédé comprend ensuite une étape 25 dans laquelle le dispositif appelant se connecte au réseau Internet et obtient son adresse IP. Il reste ensuite connecté à Internet.

Dans l'étape suivante 26 le dispositif appelant appelle en direct par le réseau téléphonique commuté le boîtier ou dispositif appelé destinataire soit en utilisant le deuxième canal B, soit en utilisant le service de mini message.

Le dispositif appelant (étape 27) transmet alors son adresse IP au dispositif destinataire.

Puis (étape 28) les deux boîtiers coupent la communication directe par le réseau téléphonique commuté entre eux (dans le cas du canal B).

L'étape 29 suivante voit le dispositif destinataire se connecter à son fournisseur d'accès Internet habituel.

Le dispositif destinataire (étape 30) se connecte alors au dispositif ou boîtier appelant grâce à l'adresse IP obtenue plus haut.

Enfin, les dispositifs d'interface établissent entre eux la communication entre eux pour la fonction de téléphonie vocale (étape 31).

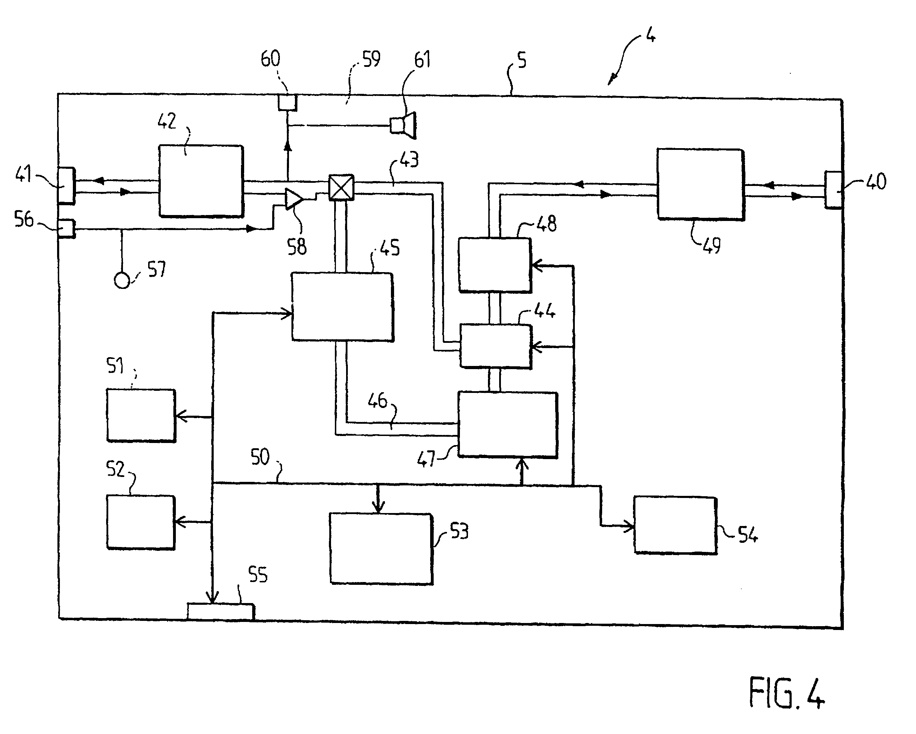

La figure 4 montre un schéma bloc de dispositif interface 4 utilisable en réception ou en émission pour lignes téléphoniques numériques 40.

Le dispositif 4 comporte un boîtier 5 incorporant des moyens semi conducteurs du type connu en eux-même, agencés pour réaliser les fonctions précisées.

Le dispositif comporte une liaison 41 vers le récepteur ou poste téléphonique connecté à un circuit de simulation téléphonique 42 connu en lui-même et raccordé via une liaison 43 à un système convertisseur analogique numérique 44.

La sortie du circuit 42 est par ailleurs également connectée (aiguillage) à un circuit 45 de compression de la voix de type connu, lui-même raccordé, via une liaison 46, à un modem 47 connu en lui-même.

Le circuit 44 de conversion analogique numérique également raccordé au modem 47 est relié à un système ou circuit d'adaptation RNIS 48 connu en lui-même dont la sortie est connectée via un circuit 49 d'interface avec une ligne RNIS, à la ligne téléphonique 40.

Les circuits 44, 45, 47 et 48 sont raccordés, via un bus de données 50, à une mémoire vive 51, une mémoire du type EEPROM, ou Flash EPROM 52, à un micro processeur 53 de calcul et par exemple à un circuit afficheur et/ou à un clavier 54.

Le bus est lui-même connecté en sortie à un connecteur 55 d'extension parallèle ou série.

Le dispositif interface 4 comporte de plus une prise microphone 56, un microphone 57, et un dispositif amplificateur 58 de connexion au circuit composé par les différents circuits électroniques 44, 45.

Un système 59 constitué d'une prise haut-parleur 60 et d'un haut-parleur 61 est également prévu et connecté à la sortie du circuit de simulation téléphonique 42.

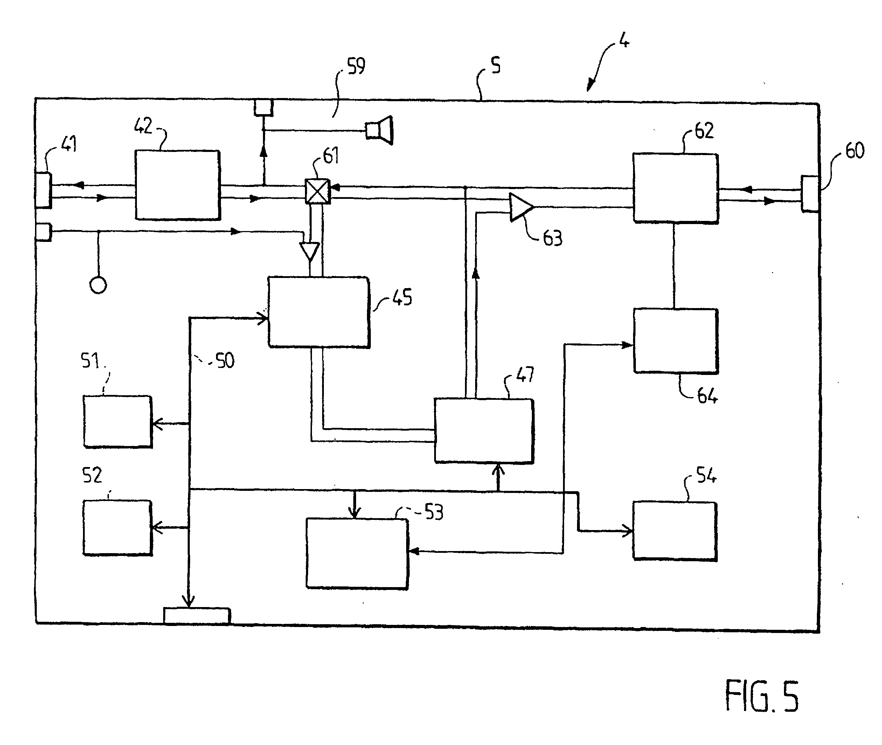

La figure 5 montre un schéma bloc de dispositif interface 4 de connexion avec une ligne téléphonique analogique 60.

Le dispositif 4 comporte un boîtier 5 qui va comporter de façon similaire au circuit décrit en référence à la figure 4, une prise 41 et des circuits 42, 55 et 59.

Un dispositif d'aiguillage 61 permet de connecter le circuit de gestion du poste téléphonique 42 soit à un circuit d'interface 62 avec la ligne téléphonique, soit avec le dispositif 45 de compression de la voix.

Ce dispositif est connecté en sortie au modem 47 connectable via un circuit d'amplification 63 au circuit interface de ligne téléphonique.

Le dispositif 4 comporte de plus comme décrit ci-avant, une mémoire RAM 51 connecté via un bus de données 50 au circuit de compression de la voix, une mémoire EPROM 52, un micro processeur 53 qui peut attaquer un circuit d'écoute haute impédance 64 relié au circuit 62 d'interface de ligne téléphonique.

Un circuit 54 afficheur/clavier est également prévu connecté au bus de données 50.

On va maintenant décrire le fonctionnement d'un système selon l'invention en mode automatique.

L'appelant compose le numéro de téléphone du destinataire en signalant au dispositif associé qu'il souhaite un appel via Internet, par exemple à l'aide d'un préfixe spécial comme "###".

Il raccroche son poste téléphonique et attend.

Le dispositif établit alors de manière totalement automatique la communication avec le dispositif appelé, par le procédé décrit en détail ci-avant.

Une fois la communication entre les deux dispositifs établie, les dispositifs interface respectifs font sonner leur poste téléphonique associé.

Les utilisateurs décrochent alors leurs postes téléphoniques et parlent.

Quand ils ont terminé ils raccrochent.

Une méthode en mode dit normal est également avantageusement prévue.

Elle permet de s'assurer au préalable de la possibilité d'appel et/ou de la présence du destinataire de l'appel.

Ici, l'appelant appelle le destinataire de manière normale.

Il s'assure donc de la présence et de la disponibilité du destinataire, et lui signale le passage en mode selon l'invention.

L'appelant demande alors à son dispositif de passer par Internet, par exemple en tapant une séquence de touches spéciales comme "###" sur son poste téléphonique.

Les dispositifs appelant et appelé prennent alors le contrôle de la ligne téléphonique et établissent la communication via Internet. Pendant ce temps les utilisateurs raccrochent leur poste.

Une fois la communication entre les deux dispositifs établie, les dispositifs font sonner leurs postes téléphoniques associés.

Les utilisateurs décrochent alors leurs postes téléphoniques et parlent.

Quant ils ont terminé ils raccrochent.

La méthode évite ainsi complètement la nécessité de définir une heure et un serveur de rendez-vous, pour se retrouver ensemble sur Internet.

Dans la suite et pour la commodité, les éléments du dispositif émetteur sont référencés avec des numéros sans " ' " (4,5,...) et ceux du dispositif récepteur avec " ' " (4',5',...).

Dans un mode de réalisation particulier, le premier utilisateur met en oeuvre une procédure accélérée dite connexion rapide en "V23" pour se connecter avec le second utilisateur en s'affranchissant d'une partie de la séquence de prise de contact (émission de détection du 2100Hz).

Une connexion en V23 dure ainsi environ 6 secondes à compter du moment où le second dispositif a décroché la ligne pour se terminer par exemple avec un message du type "CONNECT <VITESSE DE LIGNE>".

Dans le mode décrit ici, le modem du premier dispositif est, initialement, par défaut, dans un mode différent du mode "connexion rapide en V23". Pour le faire entrer dans ce mode, l'utilisateur exécute une commande dite "ATR", le modem sortant par ailleurs de ce mode lors du raccrochage du téléphone par l'utilisateur, ou si ce dernier lui transmet une autre commande.

Plus précisément le processus de programmation spécifique du microprocesseur du dispositif est par exemple :
- initialisation du processus en forçant le modem 47 du dispositif émetteur 4 en mode V23 avec une commande du type "AT+MS-3.0.1200.120032" en langage de commande dit « AT » (commande standard pour Modem) par appui sur une touche par l'utilisateur;
- commande proprement dite du microprocesseur 53 (ici dite "ATR") permettant de s'affranchir de l'attente et de la détection du 2100 Hz;
- numérotation par le modem du dispositif ou prise de la ligne avec une commande du type "ATD<(.)NUMERO DE TELEPHONE" ou "ATD" en langage AT ;
- émission du 1300 Hz cadencé;
- puis détection, entre deux émissions du 1300 Hz cadencé, de la porteuse V23 émise en réponse par le modem 47' du second dispositif 4';
- Si le dispositif émetteur 4 ne détecte rien, il y a raccrochage au bout d'un temps, dit S7, prédéterminé (par exemple 130 secondes par défaut).
- S'il y a détection, le dispositif 4 émet une porteuse par exemple à 390 Hz, et transmet un message de connexion au terminal ("CONNECT 75/1200 dans l'exemple).

L'utilisateur peut par ailleurs à tout moment interrompre la connexion rapide par exemple en lui envoyant un caractère.

Dans le mode de réalisation décrit ici, et pour que le système de connexion rapide fonctionne, il faut également que le second utilisateur ait au préalable ordonner de son côté au modem 47' de son dispositif 4' la détection en haute impédance 1300 Hz, qui est la cadence venant du modem du premier dispositif 4, appelant.

Un acquittement immédiat à la suite de cette commande est effectué par le dispositif 4', dont le modem 47' espionne la ligne en haute impédance et fonctionne par exemple comme suit :
- S'il y a détection du 1300 Hz cadencé émis par le modem 47 du premier dispositif 4, le modem 47' du second dispositif 4' envoie un message "DATA" au microprocesseur 53' et sort du mode d'espionnage.
- Le microprocesseur commande alors automatiquement au modem 54' du second dispositif automatiquement (commandes ATR et ATA ou sur une seule ligne ATRA - en langage AT) de commencer la séquence de connexion rapide en mode réponse.
- Le modem 54' est alors mis en attente de détection du 390 Hz de la porteuse en V23 appel.
- Si le modem détecte la porteuse, il renvoie le message "CONNECT 1200/75" permettant d'initier la connexion via Internet.

Si par contre après S7 secondes le modem 47' n'a toujours pas détecté de porteuse, il renvoie le message "NO CARRIER".

Dans le cas où le second dispositif 4' et son modem sont dans le mode de détection du 1300 Hz cadencé en haute impédance (mode espionnage) et que le second utilisateur veut l'interrompre, il lui suffit d'envoyer par exemple la commande "ATR2" au modem qui acquitte et sort du mode espionnage.

Avec un protocole de connexion rapide comme décrit ci-dessus l'efficacité du système est encore améliorée, le délai de passage au mode de communication téléphonique via Internet étant significativement réduit (de l'ordre de 25 %).

L'appareil IP Finder va maintenant être plus particulièrement décrit.

Il consiste en une combinaison d'un microprocesseur, d'une mémoire vive de grande capacité, d'une interface réseau et d'une mémoire mode ou disque dur pour le logiciel.

IP Finder est connecté à Internet par sa prise réseau (en général une prise Internet).

Une fois connecté au réseau Internet, IP Finder assure la fonction de recherche d'adresse IP décrite dans le procédé IP Finder et ce pour une plage prédéfinie de numéros de série.

Pour cela il utilise par exemple la méthode suivante.

Un bloc de mémoire vive est attribué à chaque numéro de série de manière fixe pour contenir l'adresse IP et le numéro de session. La taille de ce bloc est par exemple dans le cas d'un numéro de session sur un octet et d'une adresse IP sur 4 octets d'un total de 5 octets.

La capacité totale de mémoire vive détermine donc l'étendue de la plage de numéros de série qu'un seul appareil IP Finder sera capable de gérer.

Par exemple dans le cas d'une mémoire de 128 Mega Octets l'appareil pourra gérer sans problème une plage de 24 bits de numéros de série soit environ 16 millions de dispositifs.

L'appareil n'aura qu'à multiplier par 5 le numéro de série reçu pour obtenir l'adresse du bloc de mémoire affecté à ce numéro. Ainsi le traitement des requêtes est extrêmement simple et rapide et un simple processeur de micro ordinateur actuel peut largement répondre aux demandes simultanées même d'un grand nombre d'équipements.

La méthode pour déterminer le dispositif à contacter en fonction du numéro de série complet est par exemple la suivante :
- Les octets de poid fort du numéro de série (au delà de la plage gérée directement par un seul dispositif) sont convertis en hexadécimal et intégrés dans un nom de domaine qui sera celui du dispositif gérant cette plage.

Par exemple, si le numéro de série (en hexadécimal) est 00.03.C2 12.23.55 le nom de domaine associé au dispositif sera par exemple "ip_finder_0003com". Ce nom de domaine donnera accès à l'appareil IP Finder chargé de la plage de numéro de série commençant par 0003.

De cette manière au fur et à mesure de l'attribution de numéros de série, il suffit d'ajouter un appareil IP Finder pour chaque nouvelle plage.

Les avantages du procédé de communication et du système quand ils sont complétés par l'appareil IP Finder sont les suivants :

Le système et le procédé de l'invention deviennent extrêmement rapides. En temps normal seuls 4 paquets sont échangés en tout pour une session.

Ils nécessitent peu de bande passante, n'exigent aucune ressource des serveurs existants (WEB e-mail...), et sont de plus totalement automatiques et faciles à intégrer dans toutes applications du fait de leur grande simplicité.

Avec le mode de réalisation de l'invention plus particulièrement décrit, le destinataire n'a donc rien à faire de particulier si ce n'est de répondre normalement au téléphone.

De même aucun support logistique particulier, du type matériel, aucune facturation spécifique des appels de la part des fournisseurs d'accès Internet ne sont nécessaires, et ce contrairement à la méthode qui consiste à faire appeler le destinataire par son fournisseur d'accès local ou un serveur.

La méthode selon l'Invention ne demande pas non plus de système de routage ou de table de destinataires, le simple numéro de téléphone du destinataire étant suffisant.

De plus le procédé selon l'invention est indépendant du fournisseur d'accès Internet du destinataire, qui peut donc en changer à sa guise sans gêner le fonctionnement.

Ainsi, la méthode de l'invention est immédiatement applicable dans le monde entier sans nécessiter de changement de configuration ou de logistiques des fournisseurs d'accès, et tous les possesseurs d'un dispositif selon l'invention peuvent immédiatement être appelés par tous les autres sans aucun besoin de configuration ou de mise à jour de tables.

L'utilisateur peut utiliser le système de manière pratiquement aussi simple que le téléphone ordinaire. Bien entendu l'invention est utilisable avec d'autres appareils téléphoniques que les combinés, comme des télécopieurs par exemple, n'est pas limité à une communication téléphonique à deux interlocuteurs, mais peut s'adresser à plusieurs interlocuteurs communiquant simultanément et, de façon plus générale, n'est pas limitée aux modes de réalisation plus particulièrement décrits ici mais en embrasse au contraire toutes les variantes rentrant dans le cadre des équivalences.

## Revendications

1. Procédé de communication interactive entre au moins deux utilisateurs munis chacun d'un appareil téléphonique (2, 2') du réseau téléphonique commuté (3), via le réseau Internet (7), **caractérisé en ce que**, chaque appareil téléphonique (2, 2') étant directement connecté en local à un dispositif d'interface (4, 4') associé,
- un premier utilisateur, initiateur de la communication, compose sur son appareil téléphonique (2) le numéro de téléphone du second utilisateur, pour communication via le réseau téléphonique commuté (3), en signalant à son dispositif d'interface (4) associé qu'il souhaite une communication via le réseau Internet (7),
- la communication via le réseau téléphonique commuté (3) étant établie entre les utilisateurs, directement et/ou via leurs dispositifs d'interface (4, 4'), le dispositif d'interface (4) du premier utilisateur échange alors sur le réseau téléphonique commuté (3) des informations permettant la communication sur le réseau Internet avec l'appareil interface (4') du second utilisateur, puis coupe la communication directe via le réseau commuté,
- le dispositif interface (4) d'un utilisateur établit alors la communication avec le dispositif interface (4') de l'autre utilisateur via le réseau Internet (7), les appareils téléphoniques (2, 2') des deux utilisateurs étant libérés,
- une fois la communication via le réseau Internet établie, chaque dispositif d'interface (4, 4') le signale à l'utilisateur concerné,
- chacun des utilisateurs reprend alors son appareil téléphonique (2, 2') et communique en interactif avec son interlocuteur via le réseau Internet (7).

2. Procédé selon la revendication 1, **caractérisé en ce que** le premier utilisateur raccroche son appareil téléphonique (2) immédiatement après avoir signalé au dispositif d'interface (4) associé qu'il souhaite une communication via le réseau Internet (7), les communications téléphoniques par le réseau commuté puis par le réseau Internet étant ensuite établies automatiquement par le premier dispositif interface (4) avec le second dispositif interface (4').

3. Procédé selon la revendication 1, **caractérisé en ce que** le premier utilisateur obtient la communication téléphonique avec le second utilisateur via le réseau téléphonique commuté (3), signale oralement à son interlocuteur via ledit réseau téléphonique commuté (3) qu'il va continuer la communication via le réseau Internet (7), et passe la main au dispositif interface (4') associé à son appareil téléphonique (2) qui établit alors la communication avec l'autre dispositif (4') associé avec l'appareil téléphonique (2') du second utilisateur via le réseau Internet (7), pendant que lesdits utilisateurs raccrochent respectivement leurs appareils téléphoniques (2, 2').

4. Procédé de communication sur ligne analogique selon l'une quelconque des revendications précédentes, **caractérisé en ce que**, pour communiquer entre eux les deux dispositifs interface (4, 4') échangent un code de rendez vous respectif sur un serveur prédéfini (8) via le réseau téléphonique commuté, coupent ensuite la communication directe via ledit réseau téléphonique commuté (3), se connectent à leur fournisseur (6, 6') d'accès Internet respectif puis audit serveur prédéfini (8) et cherchent leur code de rendez vous, obtiennent leur adresses (IP) respectives sur le réseau Internet (7), se déconnectent du serveur prédéfini (8) et établissent alors la communication téléphonique entre les utilisateurs via ledit réseau Internet (7).

5. Procédé de communication sur ligne numérique, selon l'une quelconque des revendications 1 à 3, **caractérisé en ce que** pour établir la communication, le premier dispositif interface (4) se connecte au réseau Internet (7), obtient son adresse (IP) sur ledit réseau et, tout en restant connecté audit réseau (7), établit la communication avec le second dispositif (4') via le réseau téléphonique commuté (3) et lui transmet son adresse (IP), puis les deux dispositifs d'interface (4, 4') se déconnectent du réseau téléphonique commuté (3), le second dispositif (4') se connecte à son fournisseur (6') d'accès au réseau Internet (7) et établit la communication avec le premier dispositif (4) grâce à l'adresse (IP) obtenue précédemment via le réseau téléphonique commuté (3), de façon à permettre la communication entre les dispositifs (4 4') via le réseau Internet (7).

6. Procédé de communication selon l'une quelconque des revendications précédentes, **caractérisé en ce que** la communication entre les utilisateurs est vocale.

7. Procédé de communication selon l'une quelconque des revendications précédentes, **caractérisé en ce que** la communication entre les utilisateurs est vidéo.

8. Procédé de communication selon l'une quelconque des revendications précédentes, **caractérisé en ce que**, lors de la connexion du premier dispositif (4) sur le réseau commuté (3), on émet une fréquence de 1300 Hz cadencée, qui, si elle est détectée par le second dispositif (4') récepteur, enclenche une porteuse de fréquence inférieure.

9. Procédé de communication selon l'une quelconque des revendications précédentes, **caractérisé en ce qu'**on attribue un numéro de série fixe et identique à tous les dispositifs (4, 4'), numéro que l'on stocke dans au moins un appareil (8) connecté et interrogeable par les dispositifs pour permettre au dispositif appelant de retrouver les adresses IP des dispositifs appelés.

10. Procédé de communication selon la revendication 9, **caractérisé en ce que**, dès qu'un dispositif (4) est connecté à Internet (7), il envoie un paquet d'informations audit appareil, ledit paquet contenant : l'adresse IP, le numéro de série du dispositif (4) et un numéro de session, et lorsqu'un autre dispositif (4') a besoin de l'adresse IP du premier dispositif (4), il envoie un paquet audit appareil (8), et ledit appareil répond en envoyant un paquet d'informations contenant l'adresse IP recherchée ainsi que le numéro du dispositif.

11. Procédé selon la revendication 10, **caractérisé en ce que** la mise à jour du numéro de sessions des dispositifs (4, 4') est effectuée directement via le réseau commuté (3).

12. Système (1) de communication interactive entre au moins deux utilisateurs utilisant chacun un appareil téléphonique (2, 2') du réseau commuté (3), via le réseau Internet (7),
**caractérisé en ce que** le système comprend au moins deux dispositifs (4, 4') d'interface locaux, chacun connecté d'un côté au réseau téléphonique (3) et de l'autre côté à un appareil téléphonique (2, 2') respectif, chaque dispositif comportant :
- des moyens pour communiquer à un autre dispositif, via le réseau téléphonique, une demande de connexion à cet autre dispositif via le réseau Internet,
- des moyens de traitement et d'émission de signaux agencés pour connecter le dispositif sur le réseau Internet (7),
- des moyens de traitement et d'émission de signaux agencés pour permettre au dispositif de retrouver automatiquement l'autre dispositif sur Internet une fois connecté sur le réseau,
- des moyens de traitement, d'émission et réception de signaux, agencés pour faire alors communiquer ledit dispositif sur Internet avec l'autre dispositif, et
- des moyens de signalisation aux utilisateurs de l'établissement de ladite connexion avec le réseau Internet.

13. Système selon la revendication 12, **caractérisé en ce que** chaque dispositif (2, 2') comporte des moyens de création et d'identification d'un code de rendez-vous dans un serveur prédéfini.

14. Système selon l'une quelconque des revendications 12 et 13, **caractérisé en ce qu'**il comporte des moyens de connexion et de déconnexion du réseau téléphonique commuté et du réseau Internet, en corrélation l'un avec l'autre.

15. Système selon l'une quelconque des revendications 12 à 14, **caractérisé en ce qu'**un numéro de série fixe et unique ayant été attribué à chaque dispositif, il comporte de plus au moins un appareil (8) comprenant des moyens pour stocker l'adresse IP des dispositifs qui se connectent sur le réseau Internet, et leur numéro de série, et des moyens de recherche et de transmission d'une adresse IP recherchée et du numéro de série d'un dispositif correspondant à la demande d'un autre dispositif.

16. Système selon l'une quelconque des revendications 12 à 15, **caractérisé en ce qu'**il comporte des moyens de connexion rapides, propres à émettre et détecter du 1300 Hz cadencé et des moyens propres à utiliser une onde porteuse de plus faible fréquence pour accélérer la connexion.

17. Système selon l'une quelconque des revendications 12 à 16, **caractérisé en ce que** chaque dispositif comporte des moyens de stockage et de traitement des données transmises par les appareils téléphoniques.

18. Système selon l'une quelconque des revendications 12 à 17, **caractérisé en ce qu'**il comporte des moyens de compression/décompression de la voix transmise avec lesdits signaux.

19. Dispositif pour système (1) de communication interactive entre au moins deux utilisateurs utilisant chacun un appareil téléphonique (2, 2') du réseau commuté (3) via le réseau Internet,
**caractérisé en ce que** ce dispositif (4, 4') est connectable, d'un côté, au réseau téléphonique (3) et, de l'autre côté, à un appareil téléphonique (2, 2') et **en ce qu'**il comporte :
- des moyens pour communiquer à un autre dispositif, via le réseau téléphonique, une demande de connexion à cet autre dispositif via le réseau Internet,
- des moyens de traitement et d'émission de signaux agencés pour connecter le dispositif sur le réseau Internet (7),
- des moyens de traitement et d'émission de signaux agencés pour permettre au dispositif de retrouver automatiquement l'autre dispositif sur Internet une fois connecté sur le réseau,
- des moyens de traitement, d'émission et réception de signaux, agencés pour faire alors communiquer ledit dispositif sur Internet avec l'autre dispositif, et
- des moyens de signalisation aux utilisateurs de l'établissement de ladite connexion avec le réseau Internet.

20. Dispositif selon la revendication 19, **caractérisé en ce qu'**il comporte des moyens de création et d'identification d'un code de rendez-vous dans un serveur prédéfini.

21. Dispositif selon la revendication 19 ou 20, **caractérisé en ce qu'**il comporte des moyens de connexion et de déconnexion du réseau téléphonique commuté et du réseau Internet, en corrélation l'un avec l'autre.

22. Dispositif selon l'une des revendications 19 à 21, **caractérisé en ce qu'**il comporte des moyens de stockage et de traitement des données transmises par les appareils téléphoniques.

23. Dispositif selon l'une des revendications 19 à 22, **caractérisé en ce qu'**il comporte des moyens de compression/décompression de la voie transmise avec lesdits signaux.

## Patentansprüche

1. Verfahren zur interaktiven Kommunikation zwischen mindestens zwei jeweils mit einem Telefonapparat (2, 2') eines öffentlichen Telefonnetzes (3) ausgestatteten Teilnehmern über das Internet (7), **dadurch gekennzeichnet, dass** jeder Telefonapparat (2, 2') direkt an ein zugehöriges Schnittstellengerät (4, 4') lokal angeschlossen ist,
- wobei ein erster, die Kommunikation einleitender Teilnehmer die Telefonnummer des zweiten Teilnehmers auf seinem Telefonapparat (2) zur Kommunikation über das öffentliche Telefonnetz (3) wählt und damit seinem zugeordneten Schnittstellengerät (4) signalisiert, dass er eine Verbindung über das Internet (7) wünscht,
- wobei die Kommunikation über das öffentliche Telefonnetz (3) zwischen den beiden Teilnehmern direkt und/oder über ihre Schnittstellengeräte (4, 4') hergestellt wird, wobei das Schnittstellengerät (4) des ersten Teilnehmers über das öffentliche Telefonnetz (3) Informationen austauscht, welche die Kommunikation mit dem Schnittstellengerät (4') des zweiten Teilnehmers über das Internet ermöglichen, worauf es die direkte Kommunikation über das öffentliche Telefonnetz trennt;
- wobei das Schnittstellengerät (4) des einen Teilnehmers anschließend die Verbindung mit dem Schnittstellengerät (4') des anderen Teilnehmers über das Internet (7) herstellt und die Telefonapparate (2, 2') der beiden Teilnehmer freigegeben werden,
- wobei die Herstellung der Kommunikation über das Internet von jedem Schnittstellengerät (4, 4') dem betreffenden Teilnehmer signalisiert wird, und
- worauf jeder Teilnehmer seinen Telefonapparat (2, 2') auflegt und über das Internet (7) interaktiv mit seinem Gesprächspartner kommuniziert.

2. Verfahren nach Anspruch 1, **dadurch gekennzeichnet, dass** der erste Teilnehmer, nachdem er dem zugeordneten Schnittstellengerät (4) signalisiert hat, dass er eine Verbindung über das Internet (7) wünscht, seinen Telefonapparat (2) sofort auflegt, wobei die Telefonverbindungen mit dem zweiten Schnittstellengerät (4') über das Telefonnetz und anschließend über das Internet automatisch vom ersten Schnittstellengerät (4) aufgebaut werden.

3. Verfahren nach Anspruch 1, **dadurch gekennzeichnet, dass** der erste Teilnehmer die Telefonverbindung mit dem zweiten Teilnehmer über das öffentliche Telefonnetz (3) herstellt, seinem Gesprächspartner über das besagte öffentliche Telefonnetz (3) mündlich signalisiert, dass er die Kommunikation über das Internet (7) fortsetzen möchte und alles weitere dem mit seinem Telefonapparat (2) verbundenen Schnittstellengerät (4') überlässt, welches dann über das Internet (7) die Verbindung mit dem anderen, dem Telefonapparat (2') des zweiten Teilnehmers zugeordneten Schnittstellengerät (4') herstellt, während die betreffenden Teilnehmer ihre jeweiligen Telefonapparate (2, 2') auflegen.

4. Verfahren zur Kommunikation über analoge Leitungen nach einem der vorhergehenden Ansprüche, **dadurch gekennzeichnet, dass** die beiden Schnittstellengeräte (4, 4'), um untereinander zu kommunizieren, über das öffentliche Telefonnetz einen jeweiligen Code für eine Verabredung in einem bestimmten Server (8) austauschen, anschließend die direkte Verbindung über das öffentliche Telefonnetz (3) trennen, sich mit ihrem jeweiligen Provider (6, 6') für den Internetzugang und anschließend mit dem bestimmten Server (8) verbinden und ihren Verabredungscode austauschen, ihre jeweiligen Adressen (IP) im Internet erhalten, sich vom vorgegebenen Server (8) trennen und dann die Telefonverbindung zwischen den Teilnehmern über das Internet (7) herstellen.

5. Verfahren zur Kommunikation über digitale Leitungen nach einem der Ansprüche 1 bis 3, **dadurch gekennzeichnet, dass** (4), zur Herstellung der Kommunikationsverbindung das erste Schnittstellengerät sich mit dem Internet (7) verbindet und seine Adresse (IP) über das Internet erhält, wobei es weiterhin mit dem Internet (7) verbunden bleibt, die Verbindung mit dem zweiten Schnittstellengerät (4') über das öffentliche Telefonnetz (3) herstellt und ihm seine Adresse (IP) übermittelt, worauf sich die beiden Schnittstellengeräte (4, 4') vom öffentlichen Telefonnetz (3) trennen, das zweite Schnittstellengerät (4') sich mit seinem Provider (6') für den Internetzugang verbindet und mit Hilfe der zuvor über das öffentliche Telefonnetz (3) erhaltenen Adresse (IP) eine Verbindung mit dem ersten Schnittstellengerät (4) herstellt, um die Kommunikation zwischen den Schnittstellengeräten (4, 4') über das Internet (7) zu ermöglichen.

6. Kommunikationsverfahren nach einem der vorhergehenden Ansprüche, **dadurch gekennzeichnet, dass** die Verbindung zwischen den Teilnehmern eine Sprachverbindung ist.

7. Kommunikationsverfahren nach einem der vorhergehenden Ansprüche, **dadurch gekennzeichnet, dass** die Verbindung zwischen den Teilnehmern eine Videoverbindung ist.

8. Kommunikationsverfahren nach einem der vorhergehenden Ansprüche, **dadurch gekennzeichnet, dass** beim Verbinden des ersten Schnittstellengerätes (4) mit dem öffentlichen Telefonnetz (3) eine Taktfrequenz von 1300 Hz gesendet wird, die, wenn sie vom zweiten, empfangenden Schnittstellengerät (4') erfasst wird, einen tieferfrequenten Träger einschaltet.

9. Kommunikationsverfahren nach einem der vorhergehenden Ansprüche, **dadurch gekennzeichnet, dass** allen Schnittstellengeräten (4, 4') eine feste und identische Seriennummer zugeordnet ist, welche in mindestens einem an die Schnittstellengeräte angeschlossenen und von diesen Geräten abfragbaren Apparat (8) gespeichert wird, um dem anrufenden Schnittstellengerät das Auffinden der Adressen (IP) der angerufenen Schnittstellengeräte zu ermöglichen.

10. Kommunikationsverfahren nach Anspruch 9, **dadurch gekennzeichnet, dass**, sobald ein Schnittstellengerät (4) mit dem Internet (7) verbunden ist, dieses ein Informationspaket an den besagten Apparat (8) sendet, welches die Adresse (IP), die Seriennummer des Schnittstellengerätes (4) und eine Sitzungsnummer enthält, wobei dann, wenn ein anderes Schnittstellengerät (4') die Adresse (IP) des ersten Schnittstellengerätes (4) benötigt, dieses ein Informationspaket an den Apparat (8) überträgt, worauf der Apparat (8) in der Weise antwortet, daß er ein Informationspaket mit der gewünschten Adresse (IP) sowie der Seriennummer des Schnittstellengeräts sendet.

11. Verfahren nach Anspruch 10, **dadurch gekennzeichnet, dass** die Aktualisierung der Sitzungsnummer der Schnittstellengeräte (4, 4') direkt über das Telefonnetz (3) erfolgt.

12. System (1) zur interaktiven Kommunikation über das Internet (7) zwischen mindestens zwei Teilnehmern, die jeweils einen Telefonapparat (2, 2') des öffentlichen Telefonnetzes (3) benutzen, **dadurch gekennzeichnet, dass** das System mindestens zwei lokale Schnittstellengeräte (4, 4') umfasst, die jeweils einerseits am Telefonnetz (3) und andererseits an einem Telefonapparat (2, 2') angeschlossen sind, wobei jedes Schnittstellengerät folgende Merkmale aufweist:
- Mittel, um an ein anderes Schnittstellengerät über das Telefonnetz eine Anfrage zur Herstellung einer Verbindung mit diesem anderen Schnittstellengerät über das Internet zu kommunizieren;
- Mittel zum Verarbeiten und Senden von Signalen zum Verbinden des Schnittstellengerätes mit dem Internet (7),
- Mittel zum Verarbeiten und Senden von Signalen welche es dem Schnittstellengerät ermöglichen, das andere Schnittstellengerät über das Internet automatisch aufzufinden, sobald es mit dem Internet verbunden ist;
- Mittel zum Verarbeiten, Senden und Empfangen von Signalen, welche es dem Schnittstellengerät ermöglichen, anschließend mit dem anderen Schnittstellengerät über das Internet zu kommunizieren und
- Mittel zum Signalisieren der Herstellung der genannten Verbindung mit dem Internet an die Teilnehmer;

13. System nach Anspruch 12, **dadurch gekennzeichnet, dass** jedes Gerät (2, 2') Mittel zum Erstellen und Identifizieren eines Codes für eine Verabredung in einem bestimmten Server umfasst.

14. System nach einem der Ansprüche 12 und 13, **gekennzeichnet durch** Mittel zum Verbindungsauf- und -abbau mit dem öffentlichen Telefonnetz und dem Internet, wobei diese Mittel in Korrelation zueinander stehen.

15. System nach einem der Ansprüche 12 bis 14, **dadurch gekennzeichnet, dass** jedem Schnittstellengerät eine feste und eindeutige Seriennummer zugeordnet ist, und dass mindestens ein Apparat (8) vorgesehen ist, welcher Mittel aufweist, um die Adresse (IP) der Geräte, die sich mit dem Internet verbinden und deren Seriennummer zu speichern, und welcher ferner Mittel aufweist zum Suchen und Übertragen einer gesuchten Adresse (IP) und der Seriennummer eines Gerätes auf Anfrage eines anderen Gerätes.

16. System nach einem der Ansprüche 12 bis 15, **gekennzeichnet durch** schnelle Verbindungsmittel zum Senden und Erfassen einer Taktfrequenz von 1300 Hz sowie **durch** Mittel, die eine tieferfrequente Trägerwelle verwenden können, um die Verbindung zu beschleunigen.

17. System nach einem der Ansprüche 12 bis 16, **dadurch gekennzeichnet, dass** jedes Gerät Mittel zum Speichern und Verarbeiten der von den Telefonapparaten übertragenen Daten aufweist.

18. System nach einem der Ansprüche 12 bis 17, **gekennzeichnet durch** Mittel zum Komprimieren und Dekomprimieren der mit den besagten Signalen übertragene Sprache.

19. Gerät für ein System (1) zur interaktiven Kommunikation über das Internet zwischen mindestens zwei Teilnehmern, die jeweils einen Telefonapparat (2, 2') des öffentlichen Telefonnetzes (3) benutzen, **dadurch gekennzeichnet, dass** das Gerät (4, 4') einerseits an das Telefonnetz (3) und andererseits an einen Teilnehmerapparat (2, 2') anschließbar ist, und ferner durch folgende Merkmale **gekennzeichnet** ist:
- Mittel, um an ein anderes Gerät über das Telefonnetz eine Anfrage zur Verbindung mit diesem anderen Gerät über das Internet zu kommunizieren;
- Mittel zum Verarbeiten und Senden von Signalen zum Verbinden des Gerätes mit dem Internet (7),
- Mittel zum Verarbeiten und Senden von Signalen, welche es dem Gerät ermöglichen, das andere Gerät über das Internet automatisch aufzufinden, sobald es mit dem Internet verbunden ist;
- Mittel zum Verarbeiten, Senden und Empfangen von Signalen, welche es dem Gerät ermöglichen, anschließend mit dem anderen Gerät über das Internet zu kommunizieren, und
- Mittel zum Signalisieren der Herstellung der genannten Verbindung mit dem Internet an die Teilnehmer.

20. Gerät nach Anspruch 19, **gekennzeichnet durch** Mittel zum Erstellung und Identifizieren eines Codes für eine Verabredung in einem bestimmten Server.

21. Gerät nach Anspruch 19 oder 20, **gekennzeichnet durch** Mittel zum Verbindungsauf- und -abbau mit dem öffentlichen Telefonnetz und dem Internet, wobei diese Mittel in Korrelation zu einander stehen.

22. Gerät nach einem der Ansprüche 19 bis 21, **gekennzeichnet durch** Mittel zum Speichern und Verarbeiten der von den Telefonapparaten übertragenen Daten.

23. Gerät nach einem der Ansprüche 19 bis 22, **gekennzeichnet durch** Mittel zum Komprimieren und Dekomprimieren der mit den besagten Signalen übertragenen Sprache.

## Claims

1. Method for interactive communication between at least two users provided each with a telephone apparatus (2, 2') of the switched telephone network (3), through the Internet network (7), **characterized in that** each telephone apparatus (2, 2') being locally directly connected to an associated interface device (4, 4'),
- a first user, initiator of the communication, dials on its telephone apparatus (2) the telephone number of the second user, for communication through the switched telephone network (3), by signaling to its associated interface device (4) that he wishes a communication through the Internet network (7),
- the communication trough the switched telephone network (3) being established between the users, directly and/or through their interface devices (4, 4'), the interface device (4) of the first user then exchanges on the switched telephone network (3) information allowing the communication on the Internet network with the interface apparatus (4') of the second user, then switches off the direct communication through the switched network,
- the interface device (4) of a user then establishes the communication with the interface device (4') of the other user through the Internet network (7), the telephone apparatuses (2, 2') of both users being released,
- once the communication through the Internet network is established, each interface device (4, 4') signals this fact to the related user,
- each of the users then takes back its telephone apparatus (2, 2') and interactively communicates with its interlocutor through the Internet network (7).

2. Method according to claim 1, **characterized in that** the first user hangs up its telephone apparatus (2) immediately after signaling to the associated interface device (4) that he wishes a communication through the Internet network (7), the telephone communications through the switched network, then through the Internet network, being afterwards automatically established by the first interface device (4) with the second interface device (4').

3. Method according to claim 1, **characterized in that** the first user obtains the telephone communication with the second user through the switched telephone network (3), orally signals to its interlocutor through the switched telephone network (3) that he will continue the communication through the Internet network (7) and leaves the initiative to the interface device (4') associated to his telephone apparatus (2) which then establishes the communication with the other device (4') associated to the telephone apparatus (2') of the second user through the Internet network (7), during which the said users hang up respectively their telephone apparatuses (2, 2').

4. Method for communication on an analog line according to any of the previous claims, **characterized in that**, for a reciprocal communication, the two interface devices (4, 4') exchange a respective appointment code on a predefined server (8) through the switched telephone network, afterwards switch off the direct communication through said switched telephone network (3), connect to their respective Internet access provider (6, 6'), then to the predefined server (8) and search their appointment code, obtain their respective addresses (IP) on the Internet network (7), disconnect from the predefined server (8) and then establish the telephone communication between the users through said Internet network (7).

5. Method for communication on a digital line, according to any of claims 1 to 3, **characterized in that**, for establishing communication, the first interface device (4) connects to the Internet network (7), obtains its address (IP) on said network and, while staying connected to said network (7), establishes the communication with the second device (4') through the switched telephone network (3) and transmits its address (IP) to this second interface device, then the two interface devices (4, 4') disconnect from the switched telephone network (3), the second device (4') connects to its Internet network (7) access provider (6') and establishes the communication with the first device (4) thanks to the address (IP) previously obtained through the switched telephone network (3), in order to allow the communication between the devices (4, 4') through the Internet network (7).

6. Method for communication according to any of the previous claims, **characterized in that** the communication between the users is vocal.

7. Method for communication according to any of the previous claims, **characterized in that** the communication between the users is video.

8. Method for communication according to any of the previous claims, **characterized in that**, during the connection of the first device (4) on the switched network (3), a rhythmical 1300 Hz frequency is transmitted which, if it is detected by the second receiver device (4'), triggers a carrier of inferior frequency.

9. Method for communication according to any of the previous claims, **characterized in that** to all the devices (4, 4') is attributed a serial number which is fixed and identical, this number is memorized in at least one connected apparatus (8) and able to be interrogated by the device in order to give the possibility to the calling device to find the IP addresses of the called devices.

10. Method for communication according to claim 9, **characterized in that**, as soon as a device (4) is connected to Internet (7), it sends an information packet to said apparatus, said packet containing: the IP address, the serial number of the device (4) and a session number, and when another device (4') needs the IP address of the first device (4), it sends a packet to said apparatus (8), and said apparatus answers by sending an information packet containing the searched IP address as well as the device number.

11. Method according to claim 10, **characterized in that** the updating of the session number of the devices (4, 4') is made directly through the switched network (3).

12. System (1) for interactive communication between at least two users, each using a telephone apparatus (2, 2') of the switched network (3), through the Internet network (7),
**characterized in that** the system comprises at least two local interface devices (4, 4'), each one being connected on one side to the telephone network (3), and on the other side to a respective telephone apparatus (2, 2'), each device comprising:
- means for communicating to another device, through the telephone network, a request for connection to this other device through the Internet network,
- means for processing and transmitting signals adapted to connect the device on the Internet network (7),
- means for processing and transmitting signals adapted to allow the device to automatically find the other device on Internet, once connected on the network,
- means for processing, transmitting and receiving signals, adapted to establish the communication of said device on Internet with the other device, and
- means for signaling to the users the realization of said connection with the Internet network.

13. System according to claim 12, **characterized in that** each device (2, 2') comprises means for creating and identifying an appointment code in a predefined server.

14. System according to any of claims 12 and 13, **characterized in that** it comprises means for connecting and disconnecting from the switched telephone network and from the Internet network, in correlation one with the other.

15. System according to any of claims 12 to 14, **characterized in that** a fixed and unique serial number having been attributed to each device, it comprises further at least an apparatus (8) including means for memorizing the IP address of the devices which connect on the Internet network, and their serial number, and means for searching and transmitting a searched IP address and the serial number of a device corresponding to the request of another device.

16. System according to any claims 12 to 15,
**characterized in that** it comprises quick connection means, able to transmit and detect rhythmical 1300 Hz and means able to use a carrier wave of a lower frequency for accelerating the connection.

17. System according to any of claims 12 to 16, **characterized in that** each device comprises means for memorizing and processing data transmitted through the telephone apparatuses.

18. System according to any of claims 12 to 17, **characterized in that** it comprises compression/decompression means for the voice transmitted with said signals.

19. Device for system (1) for interactive communication between at least two users, each using a telephone apparatus (2, 2') of the switched network (3) through the Internet network,
**characterized in that** this device (4, 4') is able to be connected, on one side, to the telephone network (3) and, on the other side, to a telephone apparatus (2, 2') and **in that** it comprises:
- means for communicating to another device, through the telephone network, a request for connection to this other device through the Internet network,
- means for processing and transmitting signals adapted for connecting the device on the Internet network (7),
- means for processing and transmitting signals adapted to allow the device to automatically find the other device on Internet once connected on the network,
- means for processing, transmitting and receiving signals, adapted to then establish a communication on Internet between said device and the other device, and
- means for signaling to the users the realization of said connection with the Internet network.

20. Device according to claim 19, **characterized in that** it comprises means for creating and identifying an appointment code in a predefined server.

21. Device according to claim 19 or 20, **characterized in that** it comprises means for connection and disconnection from the switched telephone network and from the Internet network, in correlation one with the other.

22. Device according to one of claims 19 to 21, **characterized in that** it comprises means for memorizing and processing data transmitted by the telephone apparatuses.

23. Device according to one of claims 19 to 22, **characterized in that** it comprises means for compression/decompression of the voice transmitted with said signals.
